# DEMANDE DE BREVET EUROPEEN

(11) **EP 4 318 262 A1**
(43) Date de publication de la demande: **07.02.2024**
(21) Numéro de dépôt: 23188455.2
(22) Date de dépôt: 28.07.2023
(51) Int. Cl.: G06F 16/22

(54) **PROCÉDÉ DE RECHERCHE D'UN MOT-CLÉ DE MANIÈRE SÉCURISÉE DANS UN ESPACE DE DONNÉES STRUCTURÉES**

(30) Priorité: 02.08.2022 FR 2208027
(71) Demandeur: Cosmian Tech, 75008 Paris (FR)
(72) Inventeur: HEBANT, Chloé, 91300 Massy (FR); GRIEDER, Bruno, 92110 Clichy (FR)
(74) Mandataire: Dupuis-Latour, Dominique

(57) **Abrégé**

L'invention concerne un procédé de recherche, de manière sécurisée, d'une ou plusieurs adresses de données structurées ayant un mot-clé, mis en oeuvre respectivement dans un dispositif client et dans un système comprenant au moins un premier serveur d'indexation qui comprend une table d'indexation (TAB-INDEX) et au moins un second serveur d'indexation qui comprend une table de données de chaînage (TAB-CHAIN). L'invention permet une protection du résultat de la recherche et notamment du nombre de données structurées formant le résultat de la recherche.

## Description

La présente invention concerne la recherche d'une ou plusieurs adresses de données structurées ayant un mot-clé de manière sécurisée. Les adresses sont notamment des adresses dans un espace de données structurées, par exemple une table de données pouvant être chiffrées, d'un système distant.

En particulier, l'invention a pour objet un procédé de recherche d'une ou plusieurs adresses de données structurées ayant un mot-clé masqué sans déchiffrement des données et permettant une protection du résultat de la recherche et notamment du nombre de données structurées ayant un mot-clé recherché formant le résultat de la recherche.

Traditionnellement, la recherche dans une table de données aussi appelée base de données ou annuaire, mémorisée sur un dispositif serveur, est réalisée au moyen d'une requête de recherche contenant un mot-clé, émise par un dispositif client vers le dispositif serveur. Ce dernier exécute la recherche demandée dans la table de données et retourne le résultat au dispositif client, le résultat pouvant contenir une ou plusieurs données.

Si cette solution de recherche convient pour des données non sensibles, elle est toutefois inadaptée lorsque les données de la table de données et les résultats de la recherche comprennent des données confidentielles, sensibles ou personnelles.

Pour empêcher l'accès au dispositif serveur par un tiers malveillant voulant accéder et lire les données en clair de la table de données, une solution consiste à protéger les données de la table de données en chiffrant les données contenues dans celle-ci.

Le US 2017/026350 A1 décrit une telle technique de recherche.

Toutefois, lorsque le serveur va transmettre le résultat de la recherche demandée par un dispositif client, les données seront transmises de manière non chiffrée afin de pouvoir être exploitées par le dispositif client. Un tiers malveillant interceptant la communication entre le dispositif serveur et le dispositif client pourra alors écouter les données transmises et obtenir ces données. Un chiffrement des données transmises par le dispositif serveur au dispositif client protège les données transmises. Néanmoins, le tiers malveillant peut déterminer le nombre de données formant le résultat de la recherche et retrouver des informations pertinentes.

Le but de l'invention est de remédier aux inconvénients des techniques antérieures.

Ce but est atteint par un procédé, tel qu'exposé dans la revendication 1, de recherche d'une ou plusieurs adresses de données structurées ayant un mot-clé masqué, qui permet de protéger le résultat de la recherche demandée par un dispositif client et de masquer la taille du résultat, notamment le nombre d'occurrences formant le résultat de la recherche.

L'invention a également pour objet un procédé, tel qu'exposé dans la revendication 10, mis en oeuvre dans un dispositif client, de recherche d'une ou plusieurs adresses de données structurées ayant un mot-clé.
les sous-revendications visent des modes de mises en oeuvre avantageux, facultatifs, de ces procédés.

L'invention a aussi pour objet un dispositif configuré pour mettre en oeuvre l'un de ces procédés.

### Brève description des dessins

On va maintenant décrire un exemple de réalisation de la présente invention en référence aux figures annexées ou les mêmes références désignent d'une figure à l'autre des éléments identiques ou fonctionnellement semblables.
La Figure 1 illustre un exemple de système général dans lequel l'invention peut être mise en oeuvre.
La Figure 2 illustre un exemple de système comprenant les dispositifs conformes à l'invention.
La Figure 3 illustre une table de données structurées non chiffrée.
La Figure 4 illustre un mode de réalisation du procédé de recherche d'une ou plusieurs adresses de données structurées ayant un mot-clé, s'exécutant d'une part sur un dispositif client et d'autre part sur un système distant qui comprend un dispositif serveur de stockage, un premier dispositif serveur d'indexation et un second dispositif serveur d'indexation conformément à l'invention.

### Description d'exemples de mise en oeuvre de l'invention

L'invention concerne une manière sûre, fiable et protégée d'exécuter une recherche d'un mot-clé par un dispositif client afin d'obtenir une ou plusieurs adresses de données structurées, les données structurées étant mémorisées dans un ou plusieurs espaces de données structurées dans un système comprenant au moins un dispositif serveur.

Un "mot-clé" est un mot ou une donnée ou un groupe de mots ou une pluralité de données utilisés pour caractériser une donnée structurée et permettre une recherche d'information. Une "donnée structurée" est un ensemble de données élémentaires ayant chacune un format prédéfini et formant ensemble des informations relatives à un élément précis. Une "donnée élémentaire" peut être une donnée d'un champ particulier ou un fichier. L'ensemble des données structurées peut être mémorisé dans un espace de données structurées, celui-ci pouvant être constitué d'un ou plusieurs espaces de stockage (par exemple une ou des mémoires de stockage), ou une ou plusieurs tables de données structurées. La table de données structurées peut être mise en oeuvre au moyen d'un tableau en deux dimensions ou d'une base de données.

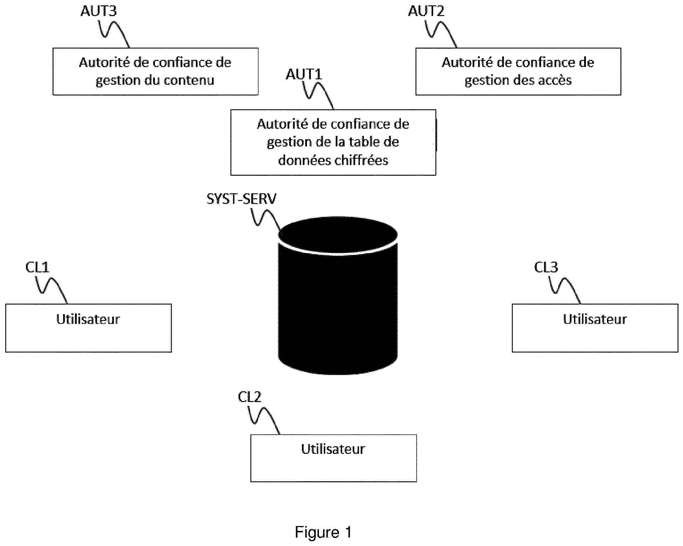

En référence à la Figure 1, on va décrire un exemple d'un système général dans lequel l'invention peut être mise en oeuvre.

Tel qu'illustré en Figure 1, le système général comprend un système SYST-SERV composé d'au moins un dispositif serveur apte à stocker des données structurées dans un espace de données structurées, notamment des données structurées chiffrées. Ce dispositif serveur de stockage peut être un serveur de confiance c'est-à-dire un serveur nécessitant une authentification pour y accéder et disposant de mécanismes de sécurité, ou un serveur non de confiance. Dans ce dernier cas, le dispositif serveur de stockage ne dispose pas d'un niveau de sécurité suffisant pour protéger les données mémorisées.

Le système général comprend également plusieurs dispositifs clients, par exemple les dispositifs clients CL1, CL2, CL3, ..., CLN qui vont soumettre des requêtes afin d'obtenir les adresses de données structurées ayant le mot-clé recherché parmi les données structurées mémorisées sur le dispositif serveur de stockage du système SYST-SERV.

Le système général peut comprendre une autorité de confiance de gestion de la table de données chiffrées AUT1, une autorité de confiance de gestion des accès AUT2 et une autorité de confiance de gestion du contenu AUT3. Ces autorités de confiance sont aptes à exécuter les mises à jour sur le système SYST-SERV, notamment par l'ajout, la modification ou la suppression de données qui pourront être indexées dans le système SYST-SERV. En outre, les autorités de confiance peuvent gérer les clés de chiffrement utilisées pour la mise en oeuvre de l'invention.

Selon un mode de réalisation particulier, certains dispositifs clients constituent des autorités de confiance de gestion de l'espace de données structurées et disposeront des droits nécessaires pour ajouter, modifier et/ou supprimer des données dans l'espace de données structurées.

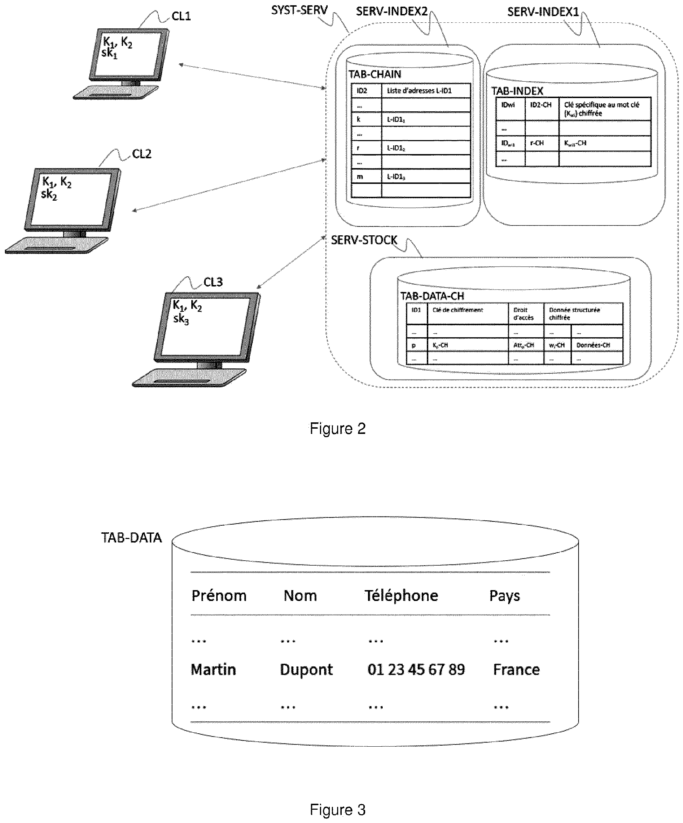

En référence à la Figure 2, on va décrire un mode de réalisation particulier de l'invention, mis en oeuvre au moyen de dispositifs clients qui vont émettre des requêtes de recherche d'un mot-clé et d'un système distant SYST-SERV qui comprend au moins un dispositif serveur de stockage SERV-STOCK, un premier dispositif serveur d'indexation SERV-INDEX1 et un second dispositif serveur d'indexation SERV-INDEX2.

Tel qu'illustré, le dispositif serveur de stockage SERV-STOCK comprend un espace de données structurées TAB-DATA-CH, tel qu'une table de données structurées, dont les données structurées peuvent être chiffrées. Le premier dispositif serveur d'indexation SERV-INDEX1 comprend une table d'indexation TAB-INDEX, et le second dispositif serveur d'indexation SERV-INDEX2 comprend une table de données de chainage TAB-CHAIN. Les dispositifs clients CL1, CL2, CL3 sont connectés au système distant SYST-SERV et en particulier au premier dispositif serveur d'indexation SERV-INDEX1, au second dispositif serveur d'indexation SERV-INDEX2 et au dispositif serveur de stockage SERV-STOCK et vont émettre une requête vers les dispositifs serveurs afin d'effectuer une recherche d'un mot-clé dans l'espace de données structurées. Une requête comprend un ensemble de messages échangés entre un dispositif client et les dispositifs serveurs afin que le dispositif client obtienne une ou plusieurs adresses de données structurées formant l'ensemble des occurrences relatives au mot-clé recherché, sans toutefois, que les dispositifs serveurs ne connaissent le nombre d'occurrences formant le résultat de la recherche.

Dans le système distant SYST-SERV, les dispositifs serveurs SERV-INDEX1, SERV-INDEX2 et SERV-STOCK sont des dispositifs distincts et distants des dispositifs clients. Les dispositifs clients et les dispositifs serveurs peuvent être connectés de manière communicante par l'intermédiaire d'un réseau de communication filaire ou sans fil, par exemple par Internet.

Selon un mode de réalisation particulier, le dispositif serveur de stockage SERV-STOCK, le premier dispositif serveur d'indexation SERV-INDEX1 et le second dispositif serveur d'indexation SERV-INDEX2 sont un même dispositif serveur qui contient l'espace de données structurées TAB-DATA-CH, la table de données de chainage TAB-CHAIN et la table d'indexation TAB-INDEX.

Selon un autre mode de réalisation particulier, le premier dispositif serveur d'indexation SERV-INDEX1 et le second dispositif serveur d'indexation SERV-INDEX2 sont un même dispositif serveur mémorisant la table de données de chainage TAB-CHAIN et la table d'indexation TAB-INDEX, et qui est distinct du dispositif serveur de stockage SERV-STOCK.

Selon un mode de réalisation particulier, l'espace de données structurées peut être composé d'un ou plusieurs espaces de stockage (par exemple une ou des mémoires de stockage) d'un ou plusieurs dispositifs serveurs de stockage.

Les dispositifs clients CL1, CL2, CL3 comprennent respectivement une première clé de chiffrement commune K₁ et une deuxième clé de chiffrement commune K₂ fournies notamment par l'autorité de confiance de gestion du contenu AUT3.

Chaque dispositif client CL1, CL2, CL3 dispose également d'une clé secrète spécifique au client skᵢ, cette clé étant notamment fonction des droits du dispositif client. Selon un autre mode de réalisation, l'ensemble des dispositifs clients CL1, CL2, CL3 disposent de la même clé spécifique sk.

Selon l'invention, un dispositif client qui souhaite effectuer une recherche d'un mot-clé, va masquer le mot-clé recherché et émettre une requête contenant le mot-clé recherché masqué vers les dispositifs serveurs d'indexation. Ces derniers vont déterminer à partir de tables de données spécifiques au moins une liste d'adresses dans l'espace de données structurées, chaque adresse de ladite au moins une liste étant une adresse d'une donnée structurée comprenant le mot-clé recherché. A partir de la liste d'adresses, le client va accéder aux données structurées dans l'espace de données structurées afin d'obtenir les occurrences formant le résultat de sa requête. Pour ce faire, il va émettre pour chaque adresse de la liste d'adresses, un message vers le dispositif serveur de stockage afin d'obtenir la donnée structurée dans l'espace de données structurées. Dans le mode de réalisation dans lequel les données structurées de l'espace de données structurées sont chiffrées, les données structurées chiffrées obtenues sont si nécessaire déchiffrées.

L'invention sera présentée ci-dessous dans un système particulier comprenant un dispositif serveur de stockage SERV-STOCK comprenant un espace de données structurées TAB-DATA-CH, un premier dispositif serveur d'indexation SERV-INDEX1 comprenant une table d'indexation TAB-INDEX et un second dispositif serveur d'indexation SERV-INDEX2 comprenant une table de données de chainage TAB-CHAIN.

Toutefois, selon un autre mode de réalisation, la table de données de chainage TAB-CHAIN et la table d'indexation TAB-INDEX peuvent être mises en oeuvre dans un même dispositif serveur d'indexation. En outre, selon encore un autre mode de réalisation particulier, l'espace de données structurées TAB-DATA-CH, la table de données de chainage TAB-CHAIN et la table d'indexation TAB-INDEX peuvent être mémorisés dans un même dispositif serveur, par exemple le dispositif serveur de stockage.

L'espace de données structurées TAB-DATA-CH comprend un ou plusieurs espaces mémorisant des données structurées, par exemple un ou plusieurs espaces de stockage tel qu'une ou plusieurs mémoires de stockage ou une table de données structurées. Selon un mode de réalisation particulier, les données structurées de l'espace peuvent être en tout ou partie chiffrées.

Il va maintenant être décrit un mode de réalisation dans lequel l'espace de données structurées comprend des données structurées chiffrées. L'invention peut également être mise en oeuvre dans un espace de données structurées dont les données structurées ne sont pas chiffrées.

Dans le mode de réalisation illustré en Figure 2, l'espace de données structurées comprend une pluralité de données structurées chiffrées et une adresse de donnée structurée ID1 pour chaque donnée structurée chiffrée. Chaque donnée structurée chiffrée comprend un mot-clé chiffré wᵢ-CH et au moins une donnée chiffrée Données-CH. Le mot-clé chiffré wᵢ-CH et ladite au moins une donnée chiffrée Données-CH peuvent être issus d'un chiffrement selon un algorithme de chiffrement symétrique ou selon un algorithme de chiffrement asymétrique. Selon un autre mode de réalisation particulier, les données structurées de l'espace de données structurées TAB-DATA-CH peuvent également contenir des données non chiffrées. Le mot-clé chiffré wᵢ-CH peut être composé d'une donnée ou d'une pluralité de données chiffrées (par exemple, le nom et le prénom d'une personne).

Une adresse de donnée structurée peut être une information relative à l'emplacement physique de la donnée structurée, un identifiant (par exemple un nombre aléatoire ou un nombre pseudo-aléatoire), une position dans une table ou une adresse physique de l'emplacement de la donnée structurée.

Le chiffrement de chaque donnée structurée de l'espace de données structurées TAB-DATA-CH permet qu'en cas d'accès au dispositif serveur de stockage par un tiers malveillant, celui-ci n'accède pas aux données en clair dans l'espace. Dans le cas particulier dans lequel l'espace de données structurées TAB-DATA-CH est une table de données structurées chiffrées telle qu'illustré en Figure 2, cette dernière est générée à partir d'une table de données structurées non chiffrées TAB-DATA telle qu'illustrée en Figure 3. Chaque ligne de la table de données structurées non chiffrées TAB-DATA comprend une donnée structurée qui se compose d'un mot-clé et d'une ou plusieurs autres données, le mot-clé pouvant être formé d'une pluralité de données. Selon l'exemple de la Figure 3, le mot-clé peut être le nom de famille et les données peuvent être le prénom, le numéro de téléphone et le pays. Toutefois, chaque donnée d'une donnée structurée peut être un mot-clé et plusieurs données peuvent constituer un mot-clé.

Un mot-clé peut être ou peut contenir également une donnée déterminée à partir d'une ou plusieurs données de la donnée structurée non chiffrée. Par exemple, si l'on considère la donnée structurée non chiffrée contenant les données nom, prénom, âge et ville (par exemple, nom "Dupont", prénom "Martin", âge "5" et ville "Lille"), le mot-clé associé à cette donnée structurée peut être "enfant", "adulte" ou "senior" et être déduit de la donnée "âge" (selon l'exemple, le mot-clé est "enfant" et est déterminé à partir de l'âge).

Selon un mode de réalisation, pour générer la table de données structurées chiffrées TAB-DATA-CH illustrée en Figure 2, chaque ligne de la table de données structurées non chiffrées TAB-DATA est chiffrée en utilisant un algorithme de chiffrement (symétrique ou asymétrique) et une clé différente Kₚ.

Selon un autre mode de réalisation, la table de données structurées chiffrées TAB-DATA-CH illustrée en Figure 2 est générée en chiffrant chaque ligne de la table de données structurées non chiffrées TAB-DATA en utilisant un algorithme de chiffrement (symétrique ou asymétrique) et une même clé Kₚ.

L'algorithme de chiffrement utilisé pour le chiffrement des données structurées est un algorithme de chiffrement symétrique ou un algorithme de chiffrement asymétrique.

L'espace de données structurées TAB-DATA-CH illustré en Figure 2 montre qu'une adresse de donnée structurée ID1 est associée à chaque donnée structurée chiffrée. La clé de chiffrement spécifique Kₚ utilisée pour le chiffrement de la donnée structurée peut également être associée à chaque donnée structurée chiffrée dans l'espace de données structurées. Toutefois, cette dernière est mémorisée de manière chiffrée Kₚ-CH afin d'être protégée.

À chaque donnée structurée chiffrée de l'espace de données structurées TAB-DATA-CH peut également être associée une information relative aux droits d'accès Attrₚ. L'information relative aux droits d'accès permet de contrôler si un dispositif client, à savoir un utilisateur, a le droit ou pas d'accéder à la donnée structurée chiffrée associée. Selon un mode de réalisation, l'information relative aux droits d'accès à la donnée structurée chiffrée permet d'autoriser ou non le déchiffrement de la donnée structurée chiffrée associée en fonction des droits accordés à l'utilisateur. L'information relative aux droits d'accès à la donnée structurée chiffrée est mémorisée de manière chiffrée Attₚ-CH dans l'espace de données structurées TAB-DATA-CH comme illustré à la Figure 2.

Selon un mode de réalisation particulier, la clé spécifique Kₚ et/ou l'information relative aux droits d'accès à la donnée structurée chiffrée Attrₚ peuvent être chiffrées par exemple en utilisant un schéma de chiffrement par attributs ABE et une clé publique maître mpk.

De préférence, les lignes de la table de données structurées TAB-DATA-CH ne sont pas dans le même ordre que les lignes de la table de données structurées non chiffrées TAB-DATA.

La table de données structurées non chiffrées TAB-DATA peut ne pas être mémorisée dans le dispositif serveur de stockage SERV-STOCK.

Le second dispositif serveur d'indexation SERV-INDEX2 mémorise la table de données de chaînage TAB-CHAIN. Cette table a pour objectif d'obtenir les adresses de données structurées ID1 de l'espace de données structurées TAB-DATA-CH dont les données structurées correspondantes contiennent un mot-clé recherché.

Ainsi, selon l'invention, la table de données de chaînage TAB-CHAIN comprend une pluralité de listes d'adresses L-ID1 et un identifiant de chainage ID2 pour chaque liste d'adresses. Chaque liste d'adresses comprend au moins une adresse de donnée structurée ID1. Chaque adresse de donnée structurée ID1 correspond à une adresse de donnée structurée ID1 de l'espace de données structurées TAB-DATA-CH. Selon un mode de réalisation particulier, les adresses de données structurées dans les listes peuvent être chiffrées.

Si une liste d'adresses comprend plusieurs adresses de données structurées ID1, ces dernières correspondent à des adresses de données structurées ID1 de l'espace de données structurées dont les données structurées correspondantes ont toutes un même mot-clé.

En outre, les adresses de données structurées ID1 dont les données structurées correspondantes dans l'espace de données structurées TAB-DATA-CH ont un même mot-clé wᵢ, sont liées entre elles au moyen de leur identifiant de chainage ID2.

Autrement dit, pour chaque mot-clé wᵢ pouvant être recherché, il existe un ou plusieurs adresses de données structurées ID1 dans l'espace de données structurées TAB-DATA-CH dont la donnée structurée associée contient le mot-clé wᵢ pouvant être recherché. Dans le cas d'une pluralité d'adresses de données structurées ID1, ces dernières sont mémorisées au moyen d'une ou plusieurs listes d'adresses de taille déterminée, dans la table de données de chainage TAB-CHAIN. En outre, ces listes sont chainées entre elles (via notamment une fonction de hachage) au moyen de leur identifiant de chainage ID2.

Afin de protéger les adresses de données structurées ID1 dans la table de données de chainage TAB-CHAIN, ces dernières peuvent être mémorisées de manière chiffrée dans les listes d'adresses. En effet, le chiffrement des adresses de données structurées ID1 dans les listes d'adresses L-ID1 permet de ne pas pouvoir retrouver l'ensemble des adresses des données structurées dont les données structurées chiffrées correspondantes ont toutes un même mot-clé.

En outre, afin d'améliorer la sécurité de la liste d'adresses et notamment protéger le nombre d'adresses de données structurées ID1 dont les données structurées (pouvant être chiffrées) correspondantes ont toutes un même mot-clé, l'ensemble des adresses de données structurées peut être organisé sous forme d'une pluralité de listes d'adresses L-ID1.

La taille t des listes d'adresses L-ID1 peut être identique. Si la taille t à la valeur une, alors le nombre x_{wi} de listes d'adresses générées pour le mot-clé wᵢ est donc égal au nombre d'adresses de données structurées ID1 de l'espace de données structurées TAB-DATA-CH dont la donnée structurée correspondante comprend ledit mot-clé wᵢ. Si la taille t à une valeur supérieure à une, alors le nombre x_{wi} de listes ainsi générées pour le mot-clé wᵢ est inférieur au nombre d'adresses de données structurées ID1 de l'espace de données structurées TAB-DATA-CH dont les données structurées correspondantes ont toutes ledit mot-clé wᵢ.

Selon un exemple, on considère le mot-clé "Dupont" présent dans la table de données structurées non chiffrées TAB-DATA aux lignes 3, 5 et 10. Ces données structurées sont mémorisées dans l'espace de données structurées TAB-DATA-CH de manière chiffrée et ont comme adresse de donnée structurée respectivement ID1a, ID1b et ID1c. Selon cet exemple, si la taille des listes d'adresses L-ID1 est fixée à la valeur une, alors la table de données de chainage TAB-CHAIN comprend trois listes d'adresses L-ID1 alors que si la taille des listes d'adresses est fixée à la valeur trois, la table de données de chainage TAB-CHAIN comprendra alors une seule liste d'adresses L-ID1 contenant les trois adresses ID1a, ID1b et ID1c.

Les adresses de données structurées ID1 peuvent être mémorisées de manière chiffrée dans les listes d'adresses L-ID1 de la table de données de chainage TAB-CHAIN. En particulier, le chiffrement peut être réalisé au moyen d'un algorithme de chiffrement (symétrique ou asymétrique) et en utilisant pour chaque adresse de donnée structurée ID1, une clé de chiffrement spécifique au mot-clé K_{wi} de la donnée structurée chiffrée correspondant à l'adresse de donnée structurée ID1.

Selon un mode de réalisation particulier, à chaque liste d'adresses L-ID1, un identifiant de chainage ID2 est généré selon une méthode particulière décrite ci-dessous afin de lier les listes d'adresses L-ID1 comprenant des adresses de données structurées ID1 dont les données structurées chiffrées correspondantes ont toutes un même mot-clé wᵢ.

Selon un exemple de réalisation, l'identifiant de chainage ID2 pour chacune des x_{wi} listes est déterminé ainsi : l'identifiant de chainage ID2 de la première liste d'adresses est déterminé au moyen d'une fonction de hachage H et en utilisant la clé spécifique au mot-clé K_{wi} et le mot-clé wᵢ. Les identifiants de chainage ID2 des listes d'adresses suivantes sont déterminés au moyen de la fonction de hachage H et en utilisant la clé spécifique au mot-clé K_{wi} et l'identifiant de chainage ID2 précédemment déterminé.

Ainsi pour le mot-clé wᵢ et la clé spécifique au mot-clé K_{wi}, l'identifiant de chainage ID2 de la première liste d'adresses est la valeur m déterminée ainsi : H(K_{wi},wi) → m ; puis l'identifiant de chainage ID2 de la liste d'adresses suivante est la valeur k déterminée ainsi : H(K_{wi},m) → k ; puis l'identifiant de chainage ID2 de la liste d'adresses suivante est la valeur r déterminée ainsi : H(K_{wi},k) → r. Ces opérations sont répétées autant de fois que nécessaire pour obtenir x_{wi} identifiants de chainage ID2.

Le résultat de cet exemple est illustré en Figure 2 par la table de données de chainage TAB-CHAIN.

Le premier dispositif serveur d'indexation SERV-INDEX1 comprend la table d'indexation TAB-INDEX. Cette table comprend pour chaque mot-clé wᵢ pouvant être recherché, un mot-clé masqué ID_{wi}, un identifiant de chainage chiffré ID2-CH, à savoir le dernier identifiant de chainage généré selon la méthode précédemment décrite et chiffré, et une clé spécifique au mot-clé K_{wi} chiffrée K_{wi}-CH.

En considérant l'exemple précédemment décrit, les données présentes dans la table d'indexation TAB-INDEX comprennent pour le mot-clé wᵢ, la clé spécifique au mot-clé K_{wi} chiffrée K_{wi}-CH et l'identifiant de chainage chiffré ID2-CH, à savoir la valeur r chiffrée r-CH.

La clé spécifique au mot-clé K_{wi} et l'identifiant de chainage ID2 doivent être sécurisés. Pour cela, selon un mode de réalisation particulier, la clé spécifique au mot-clé K_{wi} et l'identifiant de chainage ID2 sont chiffrés en utilisant la deuxième clé de chiffrement commune K₂, l'algorithme de chiffrement pouvant être un algorithme de chiffrement symétrique ou un algorithme de chiffrement asymétrique.

Selon un mode de réalisation particulier, le mot-clé masqué ID_{wi} est déterminé en appliquant une fonction de hachage H et en utilisant la première clé commune K₁ et le mot-clé wᵢ pouvant être recherché.

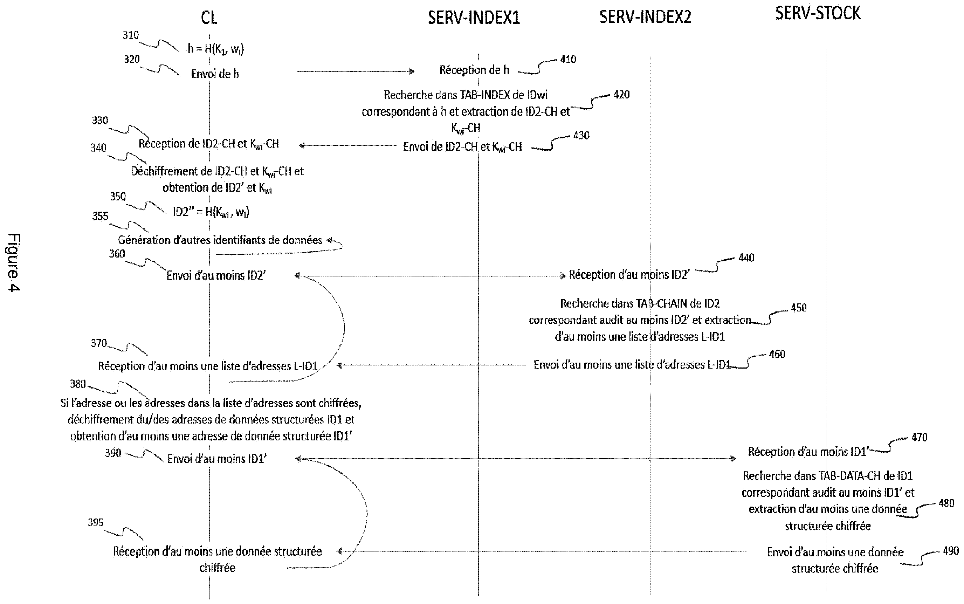

La Figure 4 illustre un mode de réalisation du procédé de recherche d'un mot-clé demandé s'exécutant d'une part sur le dispositif client et d'autre part sur le système SYST-SERV comprenant le premier dispositif serveur d'indexation SERV-INDEX1, le second dispositif serveur d'indexation SERV-INDEX2 et le dispositif serveur de stockage SERV-STOCK. Selon un mode de réalisation particulier, le dispositif serveur de stockage SERV-STOCK, le premier dispositif serveur d'indexation SERV-INDEX1 et le second dispositif serveur d'indexation SERV-INDEX2 sont un même dispositif serveur qui comprend l'espace de données structurées TAB-DATA-CH, la table de données de chaînage TAB-CHAIN et la table d'indexation TAB-INDEX. Selon un autre mode de réalisation particulier, le premier dispositif serveur d'indexation SERV-INDEX1 et le second dispositif serveur d'indexation SERV-INDEX2 sont un même dispositif serveur mémorisant la table de données de chainage TAB-CHAIN et la table d'indexation TAB-INDEX, et qui est distinct du dispositif serveur de stockage SERV-STOCK.

Tel qu'illustré en Figure 2, le dispositif client CL comprend une première clé commune K₁ et une deuxième clé commune K₂. Sur ce dispositif, une application s'exécute à partir de laquelle le client souhaite rechercher l'ensemble des données structurées contenant un mot-clé recherché wᵢ (le mot-clé pouvant être formé d'une pluralité de données) dans l'espace de données structurées TAB-DATA-CH mémorisé sur le dispositif serveur de stockage SERV-STOCK.

Le procédé débute sur le dispositif client, par la génération d'un mot-clé à rechercher masqué h (étape 310) à partir du mot-clé à rechercher wᵢ et de la première clé commune K₁. Selon un exemple de réalisation de cette étape, le mot-clé à rechercher masqué h est obtenu en appliquant une fonction de hachage H et en utilisant la première clé commune K₁ et le mot-clé à rechercher wᵢ.

Le dispositif client CL envoie alors au premier dispositif serveur d'indexation SERV-INDEX1 le mot-clé à rechercher masqué h (étape 320).

Le premier dispositif serveur d'indexation SERV-INDEX1 réceptionne le mot-clé à rechercher masqué h en provenance du dispositif client (étape 410). Cette étape est suivie d'une étape 420 de recherche dans la table d'indexation TAB-INDEX d'un mot-clé masqué ID_{wi} correspondant au mot-clé à rechercher masqué h reçu et extraction de l'identifiant de chainage chiffré ID2-CH et de la clé spécifique au mot-clé K_{wi} chiffrée K_{wi}-CH correspondant au mot-clé masqué ID_{wi} trouvé.

Dans l'exemple illustré en Figure 2, le mot-clé masqué ID_{wi} trouvé dans la table d'indexation TAB-INDEX est le mot-clé masqué ID_{wi1} et l'identifiant de chainage chiffré ID2-CH et de la clé spécifique au mot-clé K_{wi} chiffrée K_{wi}-CH extraits sont respectivement r-CH et K_{wi1}-_{CH}.

Cette étape 420 est suivie d'une étape 430 d'envoi au dispositif client de l'identifiant de chainage chiffré ID2-CH extrait et de la clé spécifique au mot-clé K_{wi} chiffrée extraite.

Le dispositif client réceptionne l'identifiant de chainage chiffré ID2-CH et une clé spécifique au mot-clé à rechercher K_{wi} chiffrée, en provenance du premier dispositif serveur d'indexation SERV-INDEX1 (étape 330). Cette étape permet d'obtenir les données nécessaires pour adresser la table de données de chainage TAB-CHAIN.

Cette étape 330 est suivie d'une étape de déchiffrement de l'identifiant de chainage chiffré ID2-CH et de la clé de chiffrement pour le mot-clé à rechercher K_{wi} chiffrée, à partir de la deuxième clé commune K₂ et d'obtention d'un premier identifiant de chainage ID2' et d'une clé de chiffrement pour le mot-clé à rechercher K_{wi} (étape 340). Selon un mode de réalisation particulier, la clé de chiffrement pour le mot-clé à rechercher K_{wi} a été générée par l'autorité de confiance qui a mis à jour les différentes tables, telle que l'autorité de confiance de la gestion de la table de données chiffrées AUT1.

L'étape 340 est suivie d'une étape 350 consistant à générer un deuxième identifiant de chainage ID2" (m, k) à partir du mot-clé à rechercher wᵢ et de la clé de chiffrement pour le mot-clé à rechercher K_{wi}.

Si le premier identifiant de chainage ID2' est différent du deuxième identifiant de chainage ID2" généré, alors l'étape 350 est suivie d'une étape 355 qui sera exécutée une ou plusieurs fois de manière itérative. Cette étape 355 consiste à générer un autre identifiant de chainage au moyen de la fonction de hachage H, de la clé spécifique au mot-clé à rechercher K_{wi} et de l'identifiant de chainage précédemment généré. L'étape 355 est réitérée jusqu'à ce que l'identifiant de chainage généré soit identique au premier identifiant de chainage.

Selon un exemple de réalisation, le premier identifiant de chainage ID2' obtenu à l'étape 340 est l'identifiant r. Le deuxième identifiant de chainage ID2" ayant pour valeur m est généré à l'étape 350 en appliquant une fonction de hachage H et en utilisant la clé de chiffrement pour le mot-clé recherché K_{wi} et le mot-clé à rechercher wᵢ (H(K_{wi}, wᵢ) → m). Si le premier identifiant de chainage ID2' de valeur r est différent du deuxième identifiant de chainage ID2" généré, à savoir la valeur m, alors un ou plusieurs autres identifiants de chainage vont être générés à l'étape 355. Lors de cette étape 355, au moins un autre identifiant de chainage k est généré en appliquant une fonction de hachage H et en utilisant la clé spécifique au mot-clé K_{wi} et l'identifiant de chaînage précédemment généré, à savoir m. Ainsi, l'identifiant de chainage k est obtenu selon la formule suivante : (H(K_{wi}, m) → k).

Si le premier identifiant de chainage ID2' ayant pour valeur r est différent de cet identifiant de chainage k, alors l'étape 355 est de nouveau exécutée pour générer un autre identifiant de chainage I en appliquant une fonction de hachage H et en utilisant la clé spécifique au mot-clé K_{wi} et l'identifiant de chainage précédemment généré, à savoir k. Ainsi, l'identifiant de chainage I est obtenu selon la formule suivante : (H(K_{wi}, k) → l). L'étape 355 est réitérée jusqu'à ce que l'identifiant de chainage généré soit identique au premier identifiant de chainage ID2' ayant pour valeur r. En effet, si l'identifiant de chainage obtenu est le même que le premier identifiant de chainage ID2', alors aucun autre identifiant de chainage ne sera généré.

Le mécanisme décrit aux étapes 340 à 355 utilisant une fonction de hachage H permet au dispositif client, sans avoir à interagir avec un quelconque serveur, de déterminer le nombre d'occurrences de résultat de la recherche du mot-clé wᵢ dans l'espace de données structurées TAB-DATA-CH. Dans l'exemple considéré, le dispositif client détermine qu'il y a trois données structurées chiffrées dans l'espace de données structurées TAB-DATA-CH ayant comme mot-clé "Dupont" car le dispositif client a généré trois identifiants de chainage distincts.

L'étape suivante consiste à envoyer du dispositif client au second dispositif serveur d'indexation SERV-INDEX2 au moins un dudit premier identifiant de chainage ID2' et dudit second identifiant de chainage ID2" généré qui sera à rechercher dans la table de données de chainage TAB-CHAIN (étape 360).

En particulier, l'étape 360 d'envoi du dispositif client au second dispositif serveur d'indexation SERV-INDEX2 est réitérée pour chaque identifiant de chainage généré, différent du premier identifiant de chainage ID2'. En d'autres termes, pour chaque identifiant de chainage devant être recherché dans la table de données de chainage TAB-CHAIN, le dispositif client envoie un message au second dispositif serveur d'indexation SERV-INDEX2.

Le second dispositif serveur d'indexation SERV-INDEX2 reçoit alors au moins un identifiant de chainage ID2', ID2" (étape 440). Il s'agit dans l'exemple considéré des identifiants ayant les valeurs r, k et m.

En particulier, dans le cas d'une pluralité d'identifiants de chainage ID2', ID2", le second dispositif serveur d'indexation SERV-INDEX2 reçoit un message du dispositif client pour chaque identifiant de chainage.

L'étape 440 est suivie d'une étape 450 de recherche par le second dispositif serveur d'indexation SERV-INDEX2, dans la table de données de chainage TAB-CHAIN d'au moins un identifiant de chainage ID2 correspondant audit au moins un identifiant de chainage ID2', ID2" (m, k, r) reçu et d'extraction d'au moins une liste d'adresses L-ID1 correspondant audit au moins un identifiant de chainage ID2 trouvé. La liste d'adresses L-ID1 comprend au moins une adresse de donnée structurée.

Le second dispositif serveur d'indexation SERV-INDEX2 envoie ensuite au dispositif client ladite au moins une liste d'adresses L-ID1 extraite (étape 460). Selon une variante de réalisation, la liste d'adresses comprend des adresses de données structurées chiffrées.

En particulier, le second dispositif serveur d'indexation SERV-INDEX2 envoie au dispositif client une liste d'adresses L-ID1 pour chaque message reçu comprenant un identifiant de chainage.

Le dispositif client CL reçoit alors au moins une liste d'adresses L-ID1 en provenance du second dispositif serveur d'indexation (étape 370).

En particulier, le dispositif client reçoit une liste d'adresses L-ID1 pour chaque identifiant de chainage ID2', ID2" transmis au second dispositif serveur d'indexation SERV-INDEX2.

Il est illustré sur la Figure 4 , le mode de réalisation selon lequel les étapes 360, 440 à 460 et 370 sont réitérées pour chaque identifiant de chainage devant être recherché dans le second dispositif serveur d'indexation SERV-INDEX2.

Si l'adresse ou les adresses de la liste d'adresses sont chiffrées, le dispositif client CL déchiffre alors la ou les adresses de données structurées de la liste à partir de la clé de chiffrement pour le mot-clé à rechercher K_{wi} et obtient au moins une adresse de donnée structurée ID1' (étape 380).

Le dispositif client CL envoie au dispositif serveur de stockage SERV-STOCK ladite au moins une adresse de donnée structurée obtenue ID1' qui sera à rechercher dans l'espace de données structurées TAB-DATA-CH (étape 390). En particulier, l'étape 390 est réitérée pour chaque adresse de donnée structurée obtenue ID1'.

Le dispositif serveur de stockage SERV-STOCK reçoit au moins une adresse de donnée structurée ID1' en provenance du dispositif client (étape 470).

Le dispositif serveur de stockage recherche ensuite dans l'espace de données structurées TAB-DATA-CH au moins une adresse de donnée structurée ID1 correspondant audit au moins une adresse de donnée structurée reçue ID1' et extrait au moins une donnée structurée chiffrée correspondant à ladite au moins une adresse de donnée structurée ID1 trouvée (étape 480).

Dans le mode de réalisation dans lequel l'espace de données structurées TAB-DATA-CH comprend également la clé de chiffrement spécifique à la donnée structurée chiffrée Kₚ-CH, cette clé de chiffrement chiffrée est également extraite.

Le dispositif serveur de stockage SERV-STOCK envoie alors au dispositif client CL ladite au moins une donnée structurée chiffrée extraite (étape 490). Cette étape peut comprend en outre, l'envoi de la clé de chiffrement spécifique chiffrée Kₚ-CH pour chaque donnée structurée chiffrée extraite.

En outre, dans le mode de réalisation dans lequel à chaque donnée structurée de l'espace de données structurées TAB-DATA-CH est associée une information relative aux droits d'accès Attrₚ alors cette information relative aux droits d'accès mémorisée sous forme chiffrée est également extraite pour chaque donnée structurée chiffrée extraite et envoyée par le dispositif serveur de stockage SERV-STOCK au dispositif client CL.

Dans le mode de réalisation particulier dans lequel la clé spécifique Kₚ et/ou l'information relative aux droits d'accès à la donnée structurée Attrₚ extraites de l'espace de données structurées TAB-DATA-CH, sont chiffrées, alors la clé spécifique Kₚ et/ou l'information relative aux droits d'accès à la donnée structurée sont envoyées au dispositif client sans être déchiffrées.

Le dispositif client CL reçoit au moins une donnée structurée recherchée chiffrée ayant le mot-clé recherché wᵢ, en provenance du dispositif serveur de stockage (étape 395). Le dispositif client peut en outre recevoir la clé de chiffrement spécifique chiffrée Kₚ-CH pour chaque donnée structurée chiffrée lorsque cette clé est mémorisée dans la table de données structurées.

Il est illustré sur la Figure 4, le mode de réalisation selon lequel les étapes 390, 470 à 490 et 395 sont réitérées pour chaque adresse de donnée structurée obtenue ID1' à rechercher dans l'espace de données structurées TAB-DATA-CH. Le dispositif client CL peut alors déchiffrer la clé de chiffrement spécifique chiffrée Kₚ-CH à partir de la clé secrète sk pour obtenir la clé de chiffrement spécifique Kₚ. Cette dernière est ensuite utilisée par le dispositif client CL pour déchiffrer la donnée structurée recherchée chiffrée reçue avec cette clé.

Dans le mode de réalisation particulier dans lequel le dispositif client CL reçoit pour chaque donnée structurée chiffrée, une information relative aux droits d'accès à la donnée structurée Attrₚ chiffrée, le dispositif client CL contrôle si le dispositif client ou l'utilisateur dispose du droit ou non d'accéder à la donnée structurée chiffrée. Selon un mode de réalisation, le dispositif client CL contrôle si l'utilisateur est autorisé ou non à déchiffrer la donnée structurée associée en fonction des droits accordés à l'utilisateur.

Si l'information relative aux droits d'accès à la donnée structurée Attrₚ obtenue est chiffrée, le dispositif client CL procède au déchiffrement de cette information à partir de sa clé secrète skᵢ.

Le déchiffrement de la clé de chiffrement spécifique chiffrée Kₚ-CH et de l'information relative aux droits d'accès à la donnée structurée chiffrée Attrₚ-CH est réalisée en utilisant un schéma de chiffrement par attributs ABE.

Selon un mode de réalisation particulier, le procédé de recherche décrit à la Figure 4 peut comprendre la recherche de plusieurs mots-clés demandés. Dans ce cas, chaque message échangé (à savoir chaque étape d'envoi et chaque étape de réception) entre le dispositif client et les dispositifs serveurs du système SYST-SERV est relatif à la pluralité de mots-clés demandés.

## Revendications

1. Procédé de recherche d'une ou plusieurs adresses de données structurées ayant un mot-clé masqué (h), mis en oeuvre par un système, le système comprenant :
• au moins un premier dispositif serveur d'indexation comprenant une table d'indexation (TAB-INDEX) qui comprend, pour chaque mot-clé (wᵢ) pouvant être recherché :
- un mot-clé masqué (ID_{wi}) ;
- un identifiant de chainage chiffré (ID2-CH) ; et
- une clé spécifique au mot-clé (K_{wi}) chiffrée ;
• au moins un second dispositif serveur d'indexation comprenant une table de données de chainage (TAB-CHAIN) qui comprend :
- une pluralité de listes d'adresses (L-ID1), chaque liste d'adresses comprenant au moins une adresse de donnée structurée (ID1) ; et
- un identifiant de chainage (ID2) pour chaque liste d'adresses, les listes d'adresses (L-ID1) comprenant des adresses de données structurées ayant un même mot-clé (wᵢ) étant chainées entre elles au moyen de leur identifiant de chainage (ID2) ;
le procédé comprenant les étapes suivantes :
• réception d'un mot-clé à rechercher masqué (h), en provenance d'un dispositif client (410) ;
• recherche dans la table d'indexation (TAB-INDEX) d'un mot-clé masqué (IDwi) correspondant au mot-clé à rechercher masqué (h) reçu, et extraction de l'identifiant de chainage chiffré (ID2-CH) et de la clé spécifique au mot-clé (Kwi) chiffrée correspondant au mot-clé masqué (IDwi) trouvé (420) ;
• envoi au dispositif client de l'identifiant de chainage chiffré (ID2-CH) extrait et de la clé spécifique au mot-clé (Kwi) chiffrée extraite (430) ;
• réception d'au moins un identifiant de chainage (ID2') (r, k, m) en provenance d'un dispositif client (440) ;
• recherche dans la table de données de chainage (TAB-CHAIN) d'au moins un identifiant de chainage (ID2) correspondant audit au moins un identifiant de chainage reçu (ID2') (m, k, r), et extraction d'au moins une liste d'adresses (L-ID1) correspondant audit au moins un identifiant de chainage (ID2) trouvé (450) ; et
• envoi au dispositif client de ladite au moins une liste d'adresses (L-ID1) extraite (460), contenant au moins une adresse de donnée structurée ayant un mot-clé masqué (h).

2. Procédé selon la revendication 1, dans lequel le système comprend en outre un dispositif serveur de stockage qui comprend un espace de données structurées comprenant :
• une pluralité de données structurées, chaque donnée structurée comprenant un mot-clé (wi) et au moins une donnée ; et
• une adresse de donnée structurée (ID1) pour chaque donnée structurée ; le procédé comprenant en outre les étapes suivantes :
• réception d'au moins une adresse de donnée structurée (ID1'), en provenance du dispositif client (470) ;
• recherche dans l'espace de données structurées (TAB-DATA-CH) d'au moins une adresse de donnée structurée (ID1) correspondant audit au moins une adresse de donnée structurée reçue (ID1'), et extraction d'au moins une donnée structurée correspondant à ladite au moins une adresse de donnée structurée (ID1) trouvée (480) ; et
• envoi au dispositif client de ladite au moins une donnée structurée extraite (490).

3. Procédé selon la revendication 2, dans lequel le mot-clé (wᵢ) et ladite au moins une donnée de chaque donnée structurée de l'espace de données structurées (TAB-DATA-CH) sont chiffrés.

4. Procédé selon la revendication 3, dans lequel dans l'espace de données structurées (TAB-DATA-CH), le mot-clé (wᵢ) et ladite au moins une donnée de chaque donnée structurée sont chiffrés à partir d'une clé de chiffrement spécifique à la donnée structurée chiffrée (Kₚ).

5. Procédé selon l'une des revendications 3 ou 4, dans lequel :
l'espace de données structurées (TAB-DATA-CH) comprend en outre, pour chaque donnée structurée, une clé de chiffrement chiffrée spécifique à la donnée structurée (Kₚ-CH) ; et
l'étape d'extraction (480) d'une ou plusieurs données structurées chiffrées comprend en outre l'extraction de la clé de chiffrement chiffrée spécifique à la donnée structurée (Kₚ-CH), et l'envoi au dispositif client de la clé de chiffrement chiffrée spécifique à la donnée structurée (Kₚ-CH).

6. Procédé selon l'une des revendications 2 à 5, dans lequel l'espace de données structurées (TAB-DATA-CH) comprend en outre, pour chaque donnée structurée, une information relative aux droits d'accès à la donnée structurée.

7. Procédé selon l'une des revendications 1 à 6, dans lequel :
la table de données de chaînage (TAB-CHAIN) comprend plusieurs listes d'adresses (L-ID1) dans lesquelles les adresses de données structurées (ID1) des listes d'adresses correspondent à des adresses de données structurées (ID1) dont les données structurées correspondantes contiennent un même mot-clé (wᵢ) ;
l'identifiant de chainage (ID2) d'une première liste d'adresses est déterminé en utilisant une fonction de hachage (H) et en utilisant la clé spécifique au mot-clé (K_{wi}) et le mot-clé (wᵢ) ; et
chaque identifiant de chainage (ID2) des listes d'adresses suivantes est généré de manière itérative en utilisant une fonction de hachage (H) et en utilisant la clé spécifique au mot-clé (K_{wi}) et un identifiant de chainage précédemment déterminé.

8. Procédé selon l'une des revendications 1 à 7, dans lequel les listes d'adresses de la table de données de chainage (TAB-CHAIN) comprennent des adresses de données structurées chiffrées.

9. Procédé selon l'une des revendications 1 à 8, dans lequel, dans la table d'indexation (TAB-INDEX), les mots-clés masqués (ID_{wi}) sont déterminés en appliquant une fonction de hachage (H) et en utilisant une première clé commune (K₁) et le mot-clé (wᵢ) pouvant être recherché.

10. Procédé de recherche, mis en oeuvre dans un dispositif client, d'une ou plusieurs adresses de données structurées ayant un mot-clé (wᵢ), le dispositif client comprenant une première clé commune (K₁) et une deuxième clé commune (K₂), le procédé comprenant les étapes suivantes :
• génération d'un mot-clé à rechercher masqué (h) à partir de la première clé commune (K1) et du mot-clé à rechercher (wi) (310) ;
• envoi, à un premier dispositif serveur d'indexation, du mot-clé à rechercher masqué (h) (320) ;
• réception, en provenance du premier dispositif serveur d'indexation (330), d'un identifiant de chainage chiffré (ID2-CH) et d'une clé spécifique au mot-clé à rechercher (Kwi) chiffrée ;
• déchiffrement de l'identifiant de chainage chiffré reçu (ID2-CH) et de la clé de chiffrement pour le mot-clé à rechercher (Kwi) chiffrée reçue, à partir de la deuxième clé commune (K2), et obtention d'un premier identifiant de chainage (ID2') et d'une clé de chiffrement pour le mot-clé à rechercher (Kwi) (340) ;
• génération d'un deuxième identifiant de chaînage (m, k) à partir du mot-clé à rechercher (wi) et de la clé de chiffrement pour le mot-clé à rechercher (Kwi) (350) ;
• envoi, à un second dispositif serveur d'indexation, d'au moins un dudit premier identifiant de chainage (ID2') et dudit second identifiant de chainage (ID2") obtenu (360) ; et
• réception, en provenance du second dispositif serveur d'indexation (370), d'au moins une liste d'adresses (L-ID1), la liste d'adresses contenant au moins une adresse de donnée structurée ayant le mot-clé recherché masqué (h).

11. Procédé selon la revendication 10, dans lequel le procédé comprend en outre les étapes suivantes :
• envoi, à un dispositif serveur de stockage, de ladite au moins une adresse de donnée structurée reçue (ID1') (390) ; et
• réception, en provenance du dispositif serveur de stockage (395), d'au moins une donnée structurée ayant le mot-clé à rechercher (wi).

12. Procédé selon la revendication 10 ou 11, dans lequel ladite au moins une adresse de donnée structurée de ladite au moins une liste d'adresses reçue est chiffrée,
et dans lequel le procédé comprend en outre une étape de déchiffrement de ladite au moins une adresse de donnée structurée de ladite au moins une liste d'adresses reçue à partir de la clé de chiffrement pour le mot-clé à rechercher (K_{wi}) et d'obtention d'au moins une adresse de donnée structurée (ID1') (380).

13. Procédé selon l'une des revendications 10 à 12, dans lequel le procédé comprend en outre de manière itérative la génération d'autres identifiants de chaînage si le premier identifiant de chainage (ID2') est différent du deuxième identifiant de chainage (ID2"), les autres identifiants de chainage étant générés au moyen de la fonction de hachage (H), de la clé spécifique au mot-clé à rechercher (K_{wi}) et d'un identifiant de chainage précédemment généré jusqu'à ce que l'identifiant de chainage généré soit identique au premier identifiant de chainage (ID2') (355).

14. Procédé selon l'une des revendications 10 à 13, dans lequel le mot-clé à rechercher masqué (h) est généré en appliquant une fonction de hachage et en utilisant la première clé commune (K₁) et le mot-clé à rechercher (wᵢ).

15. Dispositif configuré pour mettre en oeuvre le procédé selon l'une des revendications 1 à 9, ou le procédé selon l'une des revendications 10 à 14.
